# FASCICULE DE BREVET EUROPEEN

(11) **EP 2 274 577 B1**
(45) Date de publication et mention de la délivrance du brevet: **22.08.2018**
(21) Numéro de dépôt: 09750000.3
(22) Date de dépôt: 30.04.2009
(51) Int. Cl.: G01C 21/00, G01C 23/00, G05D 1/10, G08G 5/00

(54) **DISPOSITIF D'AIDE À LA NAVIGATION ET AU GUIDAGE D'UN AÉRONEF, ET SYSTÈME COMPORTANT UN TEL DISPOSITIF**
VORRICHTUNG ZUR UNTERSTÜTZUNG DER NAVIGATION UND STEUERUNG EINES FLUGZEUGS SOWIE SYSTEM MIT EINER SOLCHEN VORRICHTUNG
DEVICE FOR AIDING THE NAVIGATION AND GUIDANCE OF AN AIRCRAFT, AND SYSTEM COMPRISING SUCH A DEVICE

(30) Priorité: 06.05.2008 FR 0802510
(43) Date de publication de la demande: 19.01.2011
(73) Titulaire: AIRBUS OPERATIONS (SAS), 31060 Toulouse (FR)
(72) Inventeur: GINE I CORTIELLA, Josep, F-31400 Toulouse (FR); HUYNH, Jean-Philippe, F-31170 Tournefeuille (FR)
(74) Mandataire: Gevers & Orès
(86) Numéro de dépôt international: PCT/FR2009/000513
(87) Numéro de publication internationale: WO 2009/141519

(56) Documents cités:
- EP-A- 1 462 767
- EP-A- 1 464 576
- EP-A- 1 679 567
- FR-A- 2 887 329

## Description

La présente invention concerne un dispositif d'aide à la navigation et au guidage d'un aéronef, en particulier d'un avion de transport, ainsi qu'un système de navigation et de guidage comportant un tel dispositif. Ce dispositif a notamment pour objet d'améliorer les performances de guidage de l'aéronef le long d'une trajectoire de vol comprenant plusieurs segments successifs, dans le but en particulier d'améliorer la capacité de l'aéronef à effectuer des opérations exigeantes en performance, telles que précisées ci-dessous.

On sait que, dans le transport aérien civil, les compagnies aériennes essaient, en général, d'améliorer leurs procédures opérationnelles, afin notamment de :
- réduire la consommation de carburant et l'émission de gaz à effet de serre ;
- réduire les nuisances sonores en zones urbanisées ; et
- améliorer la régularité des temps de trajet, même avec des conditions météorologiques très dégradées (vent, nuages bas, mauvaise visibilité en approche).

De telles améliorations peuvent être obtenues en utilisant des techniques de navigation basées sur la performance, de type PBN ("Performance Based Navigation" en anglais). Ces techniques définissent un ensemble cohérent d'exigences de performance à respecter (précision, intégrité, continuité, disponibilité) pour mettre en oeuvre une procédure de vol sans contraindre le pilote et/ou le copilote à l'utilisation d'un moyen spécifique d'aide à la navigation ("sensor based navigation" en anglais).

Une procédure usuelle de type RNP ("Required Navigation Performance" en anglais) repose sur une telle technique. Dans ce cas, on définit des trajectoires RNP, qui présentent une plus grande flexibilité que des procédures usuelles basées sur des balises au sol (procédures de type VOR ou de type VOR/DME). En effet, une trajectoire RNP n'est pas contrainte à survoler des zones de couverture radioélectrique de balises, ce qui permet une meilleure optimisation, en particulier une minimisation des longueurs des trajectoires. Dans ce cas, un avion peut utiliser tout moyen de radionavigation existant, à la seule condition que ce dernier atteint le niveau de performance requis par la procédure RNP.

De plus, une distinction est faite entre des opérations de type RNP, pour lesquelles il faut alerter le pilote et/ou le copilote en cas de sortie d'une zone de confinement, et des opérations de type RNAV ("aRea NAVigation" en anglais), pour lesquelles il existe une exigence de précision sur une zone à 2RNP, sans exigence d'alerte particulière en cas de sortie de la zone de confinement.

Une opération de type RNP requiert une estimation permanente d'une erreur globale, par rapport à une trajectoire de référence. Cette erreur globale ou erreur de système totale TSE ("Total System Error" en anglais) correspond à la superposition de trois composantes :
- une erreur NSE pour "Navigation Sensor Error", qui représente une erreur entre une position estimée et la position réelle de l'avion ;
- une erreur FTE "pour Flight Technical Error", qui représente une erreur de guidage entre la trajectoire définie pour guider l'avion et celle réellement suivie ; et
- une erreur PDE pour "Path Définition Error", qui représente une erreur entre la trajectoire désirée par le pilote et/ou le copilote et celle s'y rapprochant le plus, qui est disponible dans une base de données de navigation.

L'erreur PDE est généralement négligeable par rapport aux deux erreurs NSE et FTE. Aussi, on s'intéresse principalement à ces deux erreurs NSE et FTE pour améliorer les performances RNP d'un avion.

Une architecture fonctionnelle usuelle, permettant de mettre en oeuvre des procédures RNAV ou RNP telles que des approches courbes sans aides à la navigation au sol, peut présenter le fonctionnement suivant :
A/ le pilote envoie une commande via une unité d'affichage et de surveillance de type MCDU ("Monitoring and Control Display Unit" en anglais), pour demander une approche. On sollicite alors le système de gestion de vol, de type FMS ("Flight Management System" en anglais), qui, à l'aide d'une fonction appropriée, consulte une base de données interne pour fournir une liste d'approches possibles. Le pilote choisit l'approche qu'il souhaite parmi cette liste d'approches possibles, qui est affichée par l'unité MCDU. Pour l'approche choisie, des données correspondantes sont envoyés vers d'autres systèmes et fonctions de l'avion :
B/ des capteurs inertiels de type ADIRU ("Air Data Inertial Reference Unit" en anglais) d'un système ADIRS ("Air Data and Inertial Reference System" en anglais) envoyent des données de position et de vitesse à une fonction de calcul de position et de vitesse du systeme FMS. La position calculée est envoyée vers une fonction qui calcule des déviations par rapport au plan de vol ;
C/ les déviations latérale et verticale sont affichées à l'aide de systèmes de type EFIS ("Electronic Flight Instrument System" en anglais). La déviation latérale est également envoyée à une fonction pour calculer la composante FTE qui participe à l'erreur de système totale TSE. L'autre composante de l'erreur de système totale est l'erreur de navigation NSE qui est fournie par une fonction issue du système ADIRS. Lorsque l'erreur de système totale TSE est calculée, sa valeur est comparée à la valeur RNP qui est requise, pour déterminer l'état de la fonction RNP;
D/ dans cette architecture usuelle, l'erreur de système totale TSE est surveillée de manière continue, et des alarmes sont émises si les performance RNP requises ne sont pas atteintes ; et
E/ la fonction de guidage exploite les ordres de guidage pour alimenter un pilote automatique, si le pilote a choisi un mode automatique de pilotage. La fonction de guidage utilise l'information d'état et le type d'approche choisie pour fournir une information de mode de guidage.

L'architecture usuelle précédente présente un certain nombre de limitations lorsque l'on vise à atteindre des niveaux élevés de performance en navigation. Ces niveaux sont exigés lorsque l'on met en oeuvre des opérations à faible RNP (RNP < 0,3 NM) ou des approches de précision.

Ces limitations peuvent être expliquées à l'aide d'un calcul des déviations. Le calcul des déviations et celui de la position et de la vitesse sont effectués dans un calculateur de gestion de vol de type FMC, qui est en général uniquement redondant deux fois. Le système FMS (qui comporte ces deux calculateurs FMC) n'est pas à l'abri de pannes par réinitia-lisation simultanée de ses calculateurs, entraînant ainsi à la fois la perte de la position FMS, du plan de vol et du guidage, ainsi que l'interruption intempestive de l'opération RNP en cours.

En cas d'erreur sur le calcul de position ou de déviation dans l'un des deux calculateurs FMC de cette architecture usuelle, il est uniquement possible de détecter cette erreur. Il faut pour cela que le deuxième calculateur ait effectué le calcul correctement, et il convient de surveiller l'écart entre les valeurs fournies par les deux calculateurs FMC. Cependant, sans informations supplémentaires, le pilote et/ou le copilote ne sait pas lequel des deux calculateurs FMC a fourni les données erronées, ce qui accroît leur charge opérationnelle dans des phases de vol potentiellement délicates (proximité du relief si on sort de la zone de confinement).

Par ailleurs, différents événements sont redoutés pour une opération à faible valeur RNP , à savoir en particulier :
- concernant la position : perte de position, perte de position GNSS/GPIRS, position erronée non détectée ;
- concernant le plan de vol : perte de plan de vol, plan de vol erroné non détecté ;
- concernant le guidage : perte, perte de pilote automatique ou de calculateur de guidage, guidage erroné non détecté ; et
- concernant l'affichage : perte, affichage erroné non détecté.

On notera qu'une opération exigeante en performance, telle que considérée dans la présente invention, peut également être une approche de précision usuelle sans aide de moyens au sol ou une approche usuelle de non précision de type FLS ("FMS Landing System" en anglais).

Le document FR-2 887 329 est relatif à un vol à faible RNP et le document FR-2 888 636 est relatif à une approche de non précision.

Par ailleurs, on sait que l'erreur de guidage FTE dépend étroitement des retards existants dans l'ensemble de la chaîne de navigation et de guidage. Or, avec l'architecture usuelle précitée, cette erreur FTE peut être importante, ce qui limite notamment la capacité à effectuer des opérations à faible valeur RNP.

En outre, par le document EP-1 464 576, on connaît un dispositif d'aide au pilotage d'un aéronef pendant un atterrissage. Ce dispositif comporte :
- des premiers moyens de calcul pour déterminer une position de l'aéronef ;
- des seconds moyens de calcul pour déterminer des déviations entre ladite position de l'aéronef et un segment courant d'une trajectoire de vol ; et
- des moyens de transmission pour transmettre ces déviations à un calculateur de guidage.
Le document EP 1 679 567 A décrit un dispositif d'aide à la navigation et au guidage d'un aéronef comprenant au moins deux récepteurs multimodes incluant chacun deux calculateurs indépendants qui reçoivent chacun des données de position de l'aéronef de trois sources différentes et qui déterminent une position consolidée de l'aéronef et coopérant avec un système de gestion de vol pour fournir des ordres de guidage correspondants à une procédure d'approche donnée. En outre, l'architecture du dispositif présente une certaine redondance constituée de 4 canaux indépendants (chaque récepteur multimode est doté de deux canaux indépendants). La présente invention a pour objet de remédier aux inconvénients précités. Elle concerne un dispositif d'aide à la navigation et au guidage d'un selon la revendication 1, en particulier d'un avion de transport, qui permet d'améliorer les performances de navigation et de guidage de l'aéronef, notamment lors d'opérations exigeantes en performance telles qu'une navigation à faible valeur RNP ou une approche de précision.

A cet effet, ledit dispositif du type comprenant :
- des premiers moyens de calcul pour déterminer une position de l'aéronef ;
- des seconds moyens de calcul pour déterminer des déviations entre ladite position de l'aéronef et un segment courant d'une trajectoire de vol ; et
- des moyens de transmission pour transmettre lesdites déviations à un calculateur de guidage,
est remarquable en ce que :
- ledit dispositif comporte au moins un calculateur qui est embarqué sur l'aéronef, dans lequel sont intégrés lesdits premiers et seconds moyens de calcul et lesdits moyens de transmission, et qui comprend, de plus, au moins les moyens intégrés suivants :
   - des premiers moyens de réception pour recevoir un ensemble de segments successifs d'une trajectoire de vol devant être suivie par l'aéronef ;
   - un moyen de mémorisation pour enregistrer lesdits segments ; et
   - des seconds moyens de réception pour recevoir, de façon répétitive, respectivement d'au moins trois sources d'informations différentes, des informations de position courantes de l'aéronef ;
- lesdits premiers moyens de calcul sont formés de manière à déterminer, de façon répétitive, une position consolidée de l'aéronef, à partir desdites informations de position courantes ;
- lesdits seconds moyens de calcul sont formés de manière à déterminer, de façon répétitive, des déviations entre ladite position consolidée et un segment courant de la trajectoire de vol, enregistré dans ledit moyen de mémorisation ; et
- ledit dispositif est répliqué sur au moins trois canaux différents et indépendants de sorte que tous les traitements réalisés par ledit dispositif sont réalisés simultanément sur lesdits au moins trois canaux.

Ledit calculateur regroupe les fonctions essentielles à la navigation à performance élevée, en les organisant autour d'une architecture, précisée ci-dessous, qui en assure la robustesse.

De plus, comme ledit dispositif est répliqué sur au moins trois canaux indépendants, il dispose d'une forte disponibilité et permet notamment l'exclusion automatique d'une minorité de données de sortie erronées.

Ainsi, grâce audit dispositif d'aide à la navigation et au guidage, on obtient, comme précisé ci-dessous, les avantages suivants :
- des déviations, des segments de trajectoire et des positions issus du dispositif sont intègres et sécurisés pour pouvoir être utilisés par différents systèmes abonnés (affichage, guidage, surveillance). On s'assure ainsi d'une association consistante pour un ensemble de données étroitement liées. Nominalement, les trois canaux du dispositif doivent fournir les mêmes données en sortie. Ceci évite par exemple qu'on guide l'aéronef sur une trajectoire et que l'on affiche une autre, comme cela pouvait arriver avec une architecture usuelle ou bien qu'on ait des messages de type "FM position disagree" lors d'une opération contraignante. Le bénéfice opérationnel est donc une réduction de la charge de travail de l'équipage lorsque l'on effectue des opérations contraignantes ;
- la position est intègre, en raison de la consolidation avec au moins trois sources indépendantes, ce qui permet de rejeter une minorité de sources erronées en entrée ;
- les segments de trajectoire sont intègres, puisque l'utilisation d'un contrôle de redondance cyclique ou une somme de contrôles prémunit le dispositif contre des données erronées en entrée ;
- une opération exigeante peut être engagée après mémorisation des segments de trajectoire concernés sans qu'une panne d'un système de gestion de vol provoque une interruption intempestive (perte de plan de vol et de position). Ce scénario rendait l'architecture usuelle particulièrement vulnérable ;
- des déviations calculées sont intègres puisque, sur chaque canal, on utilise des entrées intègres (position consolidée et segments de trajectoire) et l'opération de calcul est effectuée sur un calculateur à forte intégrité ; et
- même en cas de déviation erronée non détectée sur un nombre minoritaire de canaux du dispositif, les systèmes abonnés peuvent exclure ces données par comparaison avec les autres canaux. On évite ainsi autant que possible de solliciter l'équipage, puisque le dispositif sait exclure automatiquement une panne.

Ledit calculateur peut être créé spécialement pour la mise en oeuvre de l'invention. Toutefois, dans un mode de réalisation préféré, ledit calculateur fait partie d'un système de calcul à forte intégrité existant déjà sur l'aéronef. Dans une première variante de réalisation, ledit calculateur fait partie d'un récepteur multimode de type MMR ("Multi Mode Receiver" en anglais) qui, de façon usuelle, comporte deux canaux, et ledit dispositif comprend au moins deux calculateurs montés dans deux récepteurs MMR différents, totalisant ainsi quatre canaux. En outre, dans une seconde variante de réalisation, ledit calculateur est intégré dans une unité de référence inertielle à données air de type ADIRU ("Air Data Inertial Reference Unit" en anglais) qui comporte un canal unique et qui fait partie d'un système de référence inertiel à données air de type ADIRS ("Air Data Inertial Reference System" en anglais). De plus, dans cette seconde variante de réalisation, ledit dispositif comprend au moins trois calculateurs qui sont intégrés respectivement dans trois unités ADIRU différentes, totalisant ainsi trois canaux.

Les intégrations précédentes dans des moyens MMR ou ADIRU existant déjà présentent de nombreux avantages. En particulier :
- la redondance requise pour avoir au moins trois canaux indépendants est assurée ;
- ces moyens MMR ou ADIRU délivrent des données critiques et présentent des niveaux d'intégrité très élevés ; et
- ces moyens MMR ou ADIRU sont, en général déjà reliés à un calculateur de guidage, comme précisé ci-dessous, ce qui simplifie l'interface et limite les délais de latence.

Selon l'invention, le dispositif est donc répliqué sur au moins trois canaux différents de sorte que tous les traitements réalisés par ledit dispositif sont mis en oeuvre simultanément sur ces trois canaux. Pour obtenir trois canaux redondants (ou plus), le dispositif peut comporter, par exemple, un seul calculateur comprenant directement au moins trois canaux, deux calculateurs (en particulier des récepteurs multimode MMR) comprenant au moins deux canaux chacun, ou trois calculateurs munis chacun d'un seul canal.

Dans un mode de réalisation particulier, ledit dispositif comporte, de plus, des moyens pour dater les déviations qui sont transmises audit calculateur de guidage.

En outre, avantageusement, le dispositif conforme à l'invention comporte, de plus :
- des moyens de réception auxiliaires pour recevoir, de façon répétitive, respectivement d'au moins trois sources d'informations différentes, des informations de vitesse courantes de l'aéronef ; et
- des moyens de calcul auxiliaires pour déterminer, de façon répétitive, une vitesse consolidée de l'aéronef, à l'aide desdites informations de vitesse courantes.

Par ailleurs, avantageusement, le dispositif d'aide à la navigation et au guidage conforme à l'invention, comporte de plus :
- des moyens pour calculer des données de précision et d'intégrité consolidées, qui sont associées à des positions consolidées et des vitesses consolidées de l'aéronef ; et/ou
- des moyens pour estimer une erreur de système totale de type TSE, en fonction de la précision consolidée (composante NSE) et des déviations (composante FTE) ; et/ou
- des moyens pour déterminer une capacité de l'aéronef à réaliser une opération particulière exigeante en performance, telle qu'une opération à faible valeur RNP, une approche de précision sans l'aide de moyens au sol, ou une approche de non précision qui de façon usuelle n'utilise pas de moyens au sol.

Par ailleurs, dans une forme élaborée, ledit dispositif d'aide à la navigation et au guidage, conforme à l'invention, comporte de plus des moyens pour synchroniser des données provenant de plusieurs sources (de navigation) différentes, de sorte que toutes les mesures notamment de positions et de vitesses sont alignées dans un même axe de temps. Cette synchronisation peut être réalisée en particulier à l'aide d'un banc de corrélateurs usuel, pour lequel on retrouve des déphasages entre signaux lorsque l'on obtient un pic de corrélation. Ces moyens de synchronisation permettent d'obtenir notamment les avantages suivants :
- la possibilité de consolider des données de sources de natures différentes, qui n'étaient pas a priori synchronisées, telles que des données de type GNSS avec des données hybrides de type GPIRS ;
- l'amélioration de la capacité à exclure des erreurs non détectées sur les sources par l'algorithme de consolidation, en raison de la suppression sur celles-ci des erreurs dues aux décalages temporels entre les sources ; et
- l'amélioration de la disponibilité dans la fourniture des positions et des vitesses consolidées et intègres, puisqu'en cas de panne d'une source, cette dernière peut être remplacée par une autre source d'un type différent.

En outre, avantageusement, ledit dispositif comporte de plus :
- selon l'invention, des moyens pour déterminer des retards dans une chaîne de navigation et de guidage ; et/ou
- des moyens pour corriger l'effet de tels retards dans une chaîne de navigation et de guidage, afin de minimiser une erreur de guidage.

Par conséquent, grâce l'invention :
- le dispositif d'aide à la navigation et au guidage regroupe les fonctions essentielles à la navigation à performance élevée, en les organisant autour d'une architecture qui en assure la robustesse ;
- ledit dispositif est répliqué sur au moins trois canaux indépendants, ce qui permet de disposer d'une forte disponibilité et permet la mise en oeuvre d'une détection automatique et d'une exclusion automatique d'un nombre minoritaire de données de sortie erronées ;
- ces données peuvent être fournies à des systèmes associés de l'aéronef, notamment des calculateurs de guidage, d'affichage et/ou de surveillance, ce qui permet par exemple d'assurer que l'aéronef est guidé suivant les données qui sont effectivement affichées ;
- ledit dispositif peut être intégré dans un calculateur à forte intégrité existant déjà sur l'aéronef ou être monté dans un calculateur conçu spécialement pour la mise en oeuvre de la présente invention ; et
- une forme élaborée dudit dispositif permet des améliorations supplémentaires concernant l'erreur de guidage FTE, ainsi que la disponibilité d'une position intègre.

La présente invention concerne également un système de navigation et de guidage d'un aéronef, selon la revendication 11, en particulier d'un avion de transport.

Selon l'invention, ledit système de navigation et de guidage est remarquable en ce qu'il comporte ;
- des moyens qui engendrent un ensemble de segments successifs d'une trajectoire de vol devant être suivie par l'aéronef ;
- un ensemble d'au moins trois sources d'informations différentes, qui engendrent chacune des informations de position courantes de l'aéronef ;
- un dispositif selon la revendication 1, pour déterminer des déviations entre, d'une part, une position consolidée de l'aéronef, préalablement calculée à l'aide desdites informations de position courantes, et, d'autre part, un segment courant de ladite trajectoire de vol ;
- un calculateur de guidage qui élabore, au moins à l'aide des déviations déterminées par ledit dispositif, des ordres de guidage destinés au guidage de l'aéronef le long de ladite trajectoire de vol ; et
- des moyens d'actionnement pour actionner des organes de commande de l'aéronef, en fonction des ordres de guidage élaborés par ledit calculateur de guidage.

La présente invention concerne également :
- un aéronef qui comporte au moins un dispositif d'aide à la navigation et au guidage, tel que celui précité ; et/ou
- un aéronef qui comprend au moins un système de navigation et de guidage, tel que celui précité.

Les figures du dessin annexé feront bien comprendre comment l'invention peut être représentée. Sur ces figures, des références identiques désignent des éléments semblables.

La figure 1 est le schéma synoptique d'un dispositif d'aide à la navigation et au guidage conforme à l'invention.

La figure 2 montre schématiquement un mode de réalisation particulier d'un dispositif conforme à l'invention.

La figure 3 est le schéma synoptique d'un système de navigation et de guidage conforme à l'invention.

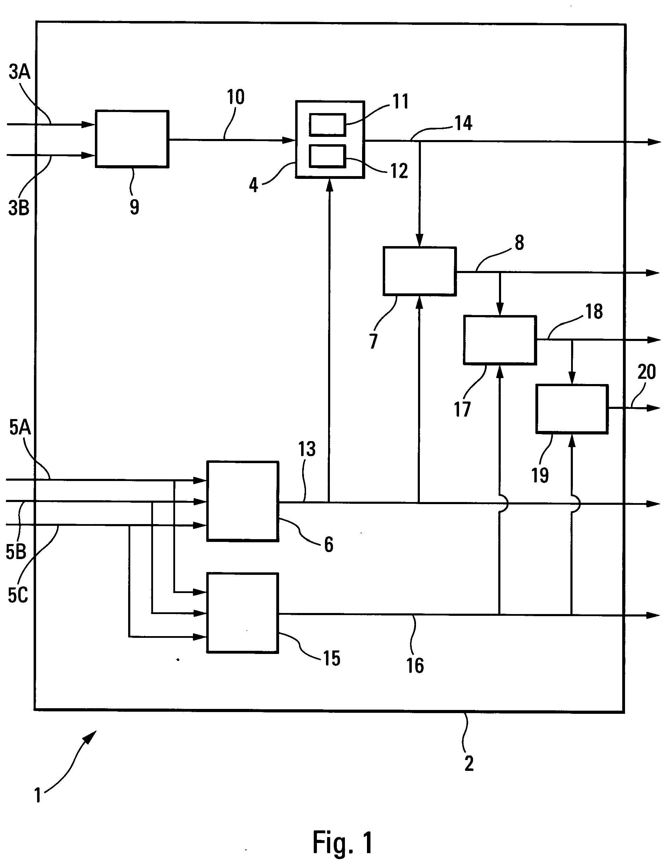

Le dispositif 1 conforme à l'invention et représenté schématiquement dans un mode de réalisation de base sur la figure 1, est destiné à aider à la navigation et au guidage d'un aéronef (non représenté), par exemple un avion de transport (civil ou militaire), le long d'une trajectoire de vol (également non représentée) comprenant une pluralité de segments (de vol) successifs. Ce dispositif 1 a pour objet notamment d'améliorer les performances de guidage et de navigation de l'aéronef, afin de lui permettre en particulier de réaliser des opérations exigeantes en performance, telles qu'une navigation à faible valeur RNP ou une approche de précision par exemple.

A cet effet, ledit dispositif 1 qui est embarqué sur l'aéronef comprend N canaux indépendants, N étant un entier supérieur ou égal à trois, c'est-à-dire que tous les traitements réalisés par ce dispositif 1 (et précisés ci-dessous) sont réalisés simultanément sur au moins trois canaux différents, les éléments utilisés pour les traitements étant répliqués N fois. De plus, comme ces canaux sont indépendants les uns des autres, une panne ou une erreur sur l'un de ces canaux ne perturbe pas les traitements sur les autres canaux.

En outre, selon l'invention, ledit dispositif 1 comporte au moins un calculateur 2 qui est embarqué sur l'aéronef et qui comprend au moins les moyens intégrés suivants :
- des moyens de réception de données, en l'occurrence des liaisons 3A et 3B, pour recevoir, de l'extérieur du dispositif 1, d'au moins une source et de préférence de deux sources différentes précisées ci-dessous, un ensemble de segments (de vol) successifs d'une trajectoire de vol usuelle devant être suivie par l'aéronef ;
- un moyen de mémorisation 4 pour enregistrer les différents segments reçus par l'intermédiaire desdites liaisons 3A et 3B ;
- des moyens de réception de données, en l'occurrence trois liaisons 5A, 5B et 5C, pour recevoir, de façon répétitive, de l'extérieur du dispositif 1, respectivement d'au moins trois sources d'informations différentes précisées ci-dessous, des informations de position courantes de l'aéronef. Chaque information de position courante indique la position courante de l'aéronef, telle que déterminée par la source d'informations correspondante ;
- des moyens de calcul 6 qui sont reliés auxdites liaisons 5A, 5B et 5C et qui sont formés de manière à déterminer, de façon répétitive (c'est-à-dire à chaque réception de nouvelles informations de position courantes), selon un mode de calcul usuel, une position consolidée de l'aéronef, à partir desdites informations de position courantes reçues par l'intermédiaire desdites liaisons 5A, 5B et 5C pour une même position effective de l'aéronef ;
- des moyens de calcul 7 qui sont formés de manière à déterminer de façon répétitive (c'est-à-dire pour chaque nouvelle position consolidée calculée), des déviations latérales et verticales entre cette position consolidée et le segment courant de la trajectoire de vol, qui est enregistré dans ledit moyen de mémorisation 4 ; et
- des moyens de transmission de données, en l'occurrence une liaison 8, pour transmettre les déviations déterminées par lesdits moyens de calcul 7 à des moyens externes au dispositif 1, et en particulier à un calculateur de guidage comme précisé ci-dessous.

Lesdits moyens de réception 3A et 3B comportent une ou plusieurs entrées permettant de recevoir des données du plan de vol. Ces données définissent notamment :
- la géométrie des segments successifs formant le plan de vol ; et
- le niveau de performance en navigation requis pour voler le long de chacun de ces segments (niveau de RNP, exigences de précision et d'intégrité pour une approche de précision, ...).

Ledit dispositif 1 comporte, de plus, des moyens 9 pour réaliser un calcul d'intégrité usuel, à l'aide d'une surveillance redondante cyclique de type CRC ("Cyclic Redundancy Check" en anglais). Ce calcul d'intégrité présente une forte capacité à détecter et à rejeter des données erronées transmises par lesdites liaisons 3A et 3B. Ces moyens 9 sont reliés par l'intermédiaire d'une liaison 10 audit moyen de mémorisation 4, et ils transmettent à ces derniers (en vue de leur enregistrement) uniquement des segments de trajectoire de vol qui ont été validés par le calcul d'intégrité.

Ledit moyen de mémorisation 4 comporte des moyens 11 comprenant, par exemple, une mémoire tampon avec une logique associée pour conserver une suite ordonnée de segments de trajectoire. Les segments de trajectoire enregistrés ont d'abord été validés par le calcul d'intégrité mis en oeuvre par les moyens 9. Ces moyens 11 sont formés de manière à conserver une suite ordonnée de segments :
- sans qu'il existe de duplication. Pour ce faire, en cas de perte d'une source d'informations reliée à l'une des liaisons 3A et 3B, en particulier un calculateur de gestion de vol, qui fournit le plan de vol en entrée, on réalise un basculement vers une autre source d'informations, par exemple un autre calculateur de gestion de vol, qui transmet, de façon désynchronisée et en retard avec la première source, une partie des segments déjà stockés ; et
- sans qu'il existe des trous de trajectoire entre segments successifs. Pour ce faire, en cas de perte d'une source fournissant le plan de vol, on bascule éventuellement à une autre source désynchronisée et en avance avec cette première source. Une telle mise en oeuvre requiert que plusieurs segments sont stockés en avance par rapport au segment courant.

Ledit moyen de mémorisation 4 comporte, de plus, des moyens 12 pour mettre en oeuvre les opérations suivantes :
- identifier, à chaque instant, à partir d'une position consolidée et d'une vitesse consolidée reçues par l'intermédiaire d'une liaison 13, le segment courant, c'est-à-dire le segment de la trajectoire de vol que l'aéronef suit actuellement ;
- définir les segments suivants (c'est-à-dire qui suivent directement le segment courant) selon un ordre conforme au plan de vol ; et
- effectuer une surveillance des segments enregistrés dans les moyens 11, pour s'assurer de la disponibilité de ces segments suivants.

Le dispositif 1 comporte également des moyens (non représentés) pour prévenir le pilote à l'avance, lorsque les segments suivants ne sont pas disponibles, de manière à lui permettre alors de préparer une sortie de l'opération (à performance élevée) en cours, et ceci dans les meilleures conditions d'anticipation.

Les informations précédentes peuvent également être transmises par l'intermédiaire d'une liaison 14 à des moyens utilisateurs externes au dispositif 1.

Par ailleurs, lesdites liaisons 5A, 5B et 5C fournissent également aux moyens 6, de façon répétitive, des informations de vitesse courantes de l'aéronef, qui représentent les vitesses courantes mesurées effectivement par au moins trois sources d'informations différentes, de préférence celles qui fournissent les informations de position courantes. Lesdits moyens 6 utilisent les informations de vitesse courantes, ainsi reçues, pour calculer, de façon répétitive, selon un mode de calcul usuel, une vitesse consolidée de l'aéronef.

Le calcul de la position consolidée et de la vitesse consolidée, mis en oeuvre par lesdits moyens 6, à partir d'au moins trois sources d'informations indépendantes, permet l'exclusion automatique d'une minorité de sources erronées. Ces sources indépendantes sont les mêmes pour chacun des N canaux redondants du dispositif 1. De préférence, les informations de position et les informations de vitesse, mesurées par les sources d'informations, sont mesurées sensiblement au même instant, afin de pouvoir réaliser une exclusion efficace d'éventuelles erreurs.

En outre, ledit dispositif 1 comporte également des moyens 15 qui sont reliés auxdites liaisons 5A, 5B et 5C et qui sont formés de manière à réaliser un calcul usuel de précision et d'intégrité consolidées, à partir des mêmes sources que celles qui alimentent les moyens 6. Les données de précision et d'intégrité déterminées par lesdits moyens 15 sont associées à la position consolidée et à la vitesse consolidée, déterminées par lesdits moyens 6. Ces données de précision et d'intégrité peuvent être transmises par l'intermédiaire d'une liaison 16 notamment à des moyens utilisateurs externes audit dispositif 1.

Le dispositif 1 peut également comporter des moyens (non représentés) pour dater les déviations qui sont transmises par lesdits moyens 7.

En outre, dans un mode de réalisation particulier, ledit dispositif 1 comporte également des moyens 17 qui sont reliés auxdits moyens 7 et 15 et qui sont formés de manière à estimer une erreur de système totale de type TSE. Ces moyens 17 déterminent cette erreur de système totale TSE, en fonction de la précision consolidée reçue desdits moyens 15, qui illustre une erreur NSE, et des déviations calculées par lesdits moyens 7, qui illustrent une erreur FTE. L'erreur de système totale TSE peut être transmise par l'intermédiaire d'une liaison 18, notamment à des moyens utilisateurs externes audit dispositif 1.

En outre, dans un mode de réalisation particulier, ledit dispositif 1 comporte également des moyens 19 qui sont, par exemple, reliés auxdites liaisons 16 et 18 et qui sont formés de manière à vérifier si l'aéronef est capable de réaliser une opération particulière, qui est exigeante en performance, par exemple une opération à faible valeur RNP, une approche de précision ou une approche de non précision.

Pour une opération à faible valeur RNP, lesdits moyens 19 peuvent réaliser successivement les opérations suivantes :
- recevoir la valeur de l'erreur système totale TSE, déterminée par lesdits moyens 17 ;
- comparer cette erreur TSE à un niveau RNP requis sur le segment de trajectoire associé. Le niveau RNP requis et le segment de trajectoire associé sont reçus dudit moyen de mémorisation 4. Pour ne pas surcharger la figure 1, la liaison existant entre le moyen de mémorisation 4 et les moyens 19 n'a pas été représentée sur cette figure 1 ; et
- vérifier l'état du pilote automatique et du directeur de vol de l'aéronef.

En ce qui concerne une approche de précision sans moyens d'aide au sol, les moyens 19 peuvent réaliser les opérations suivantes :
- comparer les niveaux de précision et d'intégrité reçus desdits moyens 15 avec des niveaux requis pour l'approche de précision, qui ont été stockés dans ledit dispositif 1 ; et
- vérifier l'état du pilote automatique et du directeur de vol.

En outre, concernant une approche de non précision de type FLS ("FMS Landing System" en anglais), lesdits moyens 19 peuvent comparer des niveaux de précision et d'intégrité reçus desdits moyens 15, à des niveaux requis pour cette approche qui sont enregistrés ledit dispositif 1.

Lesdits moyens 19 peuvent réaliser les opérations précédentes, non seulement pour le segment courant de la trajectoire de vol, mais également pour des segments prochains, puisque ces derniers sont stockés dans le moyen de mémorisation 4. Ainsi, le dispositif 1 peut, par exemple, prévenir le pilote à l'avance qu'une opération exigeante en performance ne peut plus être poursuivie, lorsque le moyen de mémorisation 4 ne contient pas les segments prochains de la trajectoire de vol (qui suivent le segment courant).

Dans le cadre de la présente invention, chaque calculateur 2 du dispositif 1 peut être créé spécialement pour la mise en oeuvre de l'invention. Toutefois, dans un mode de réalisation préféré, chaque calculateur 2 fait partie d'un système de calcul (ou calculateur) à forte intégrité existant déjà sur l'aéronef.

Dans une première variante de réalisation, chaque calculateur 2 fait partie d'un récepteur multimode de type MMR ("Multi Mode Receiver" en anglais) qui, de façon usuelle, comporte deux canaux, et ledit dispositif 1 comporte au moins deux calculateurs 2 montés dans deux récepteurs MMR différents de l'aéronef.

Dans le cas où le dispositif 1 comporte en tout quatre canaux, l'exigence concernant les canaux (plus de trois canaux), qui assure l'intégrité des sorties, est respectée. Dans ce cas, les trois premiers canaux peuvent être destinés aux fonctions précitées, et le quatrième canal peut être utilisé pour améliorer la disponibilité de la fourniture des données intègres, puisqu'il est possible de rejeter l'un de ces trois premiers canaux lorsqu'il est erroné.

En outre, dans une seconde variante de réalisation, chaque calculateur 2 est intégré dans une unité de référence inertielle à données air, de type ADIRU ("Air Data Inertial Reference Unit" en anglais), qui comporte un canal unique et qui fait partie d'un système de référence inertiel à données air, de type ADIRS ("Air Data Inertial Reference System" en anglais). De plus, dans cette seconde variante de réalisation, ledit dispositif 1 comprend au moins trois calculateurs 2 qui sont intégrés respectivement dans trois unités ADIRU différentes, qui fournissent des données usuelles inertielles et hybrides GPIRS.

Les intégrations précédentes des calculateurs 2 dans des moyens MMR ou ADIRU existant déjà présentent de nombreux avantages. En particulier :
- la redondance requise pour avoir au moins trois canaux est assurée ;
- ces moyens MMR ou ADIRU délivrent des données critiques et présentent des niveaux d'intégrité très élevés ; et
- ces moyens MMR ou ADIRU sont, en général, déjà reliés à un calculateur de guidage, tel que précisé ci-dessous, ce qui simplifie l'interface et limite les délais de latence.

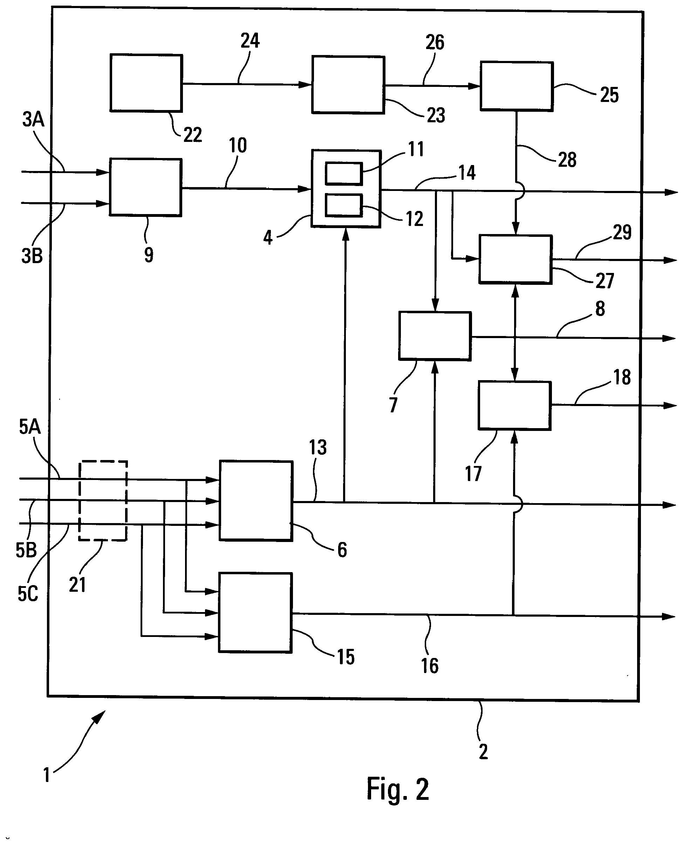

Par ailleurs, dans un mode de réalisation élaboré qui vise à obtenir des performances élevées en guidage, ledit dispositif 1 comporte de plus, comme représenté sur la figure 2, des moyens 21 pour synchroniser des données issues de différentes sources d'informations de sorte que toutes les mesures notamment de positions et de vitesses sont alignées dans un même axe de temps. Cette synchronisation peut être réalisée en particulier à l'aide d'un banc usuel de corrélateurs, pour lequel on retrouve des déphasages entre signaux lorsque l'on obtient un pic de corrélation. Ces moyens de synchronisation 21 permettent d'obtenir les avantages suivants :
- la possibilité de consolider des données issues de sources de natures différentes, qui n'étaient pas a priori synchronisées, telles que des données de type GNSS ("Global Navigation Satellite System" en anglais) avec des données hybrides de type GPIRS ("hybrid GPs and Inertial Reference System" en anglais) ;
- l'amélioration de la capacité à exclure des erreurs non détectées sur les sources par un algorithme de consolidation (des moyens 6 ou 15), en raison de la suppression sur celles-ci des erreurs dues aux décalages temporels entre les sources ; et
- l'amélioration de la disponibilité dans la fourniture des positions et des vitesses consolidées et intègres, puisqu'en cas de panne d'une source, cette dernière peut être remplacée par une autre source d'un type différent.

En outre, dans ce mode de réalisation élaboré, ledit dispositif 1 comporte, de plus, des moyens 22 permettant d'estimer des retards dans une chaîne de navigation et de guidage. Ces moyens 22 déterminent un temps de transit TD entre l'arrivée d'une information dans une source de navigation et le déclenchement d'une action, en rapport avec cette même information, par une fonction de guidage.

Dans une première variante de réalisation, l'estimation du temps de transit TD consiste à associer un témoin à une donnée qui va transiter depuis une source de navigation (moyens 32 par exemple) jusqu'à un calculateur de guidage (calculateur 39 par exemple). L'arrivée du témoin à la source de navigation lance une première interruption pour dater le départ. Lorsque ce même témoin arrive au calculateur de guidage, une deuxième interruption est lancée pour dater l'instant d'arrivée. En calculant la différence entre ces deux instants, les moyens 22 obtiennent l'estimation du temps de transit TD entre ces deux points de la chaîne de navigation et de guidage.

Dans une seconde variante de réalisation, lesdits moyens 22 peuvent utiliser un horodatage systématique de toutes les données fournies par des sources de navigation pour estimer le temps de transit TD dans la chaîne de navigation et de guidage. Lorsqu'une donnée passe à une fonction suivante (dans la chaîne), on réserve un champ sur la donnée de sortie pour conserver l'horodatage qui venait de la donnée de navigation. En fin de transit, à l'arrivée au calculateur de guidage, on compare l'horodatage retrouvé avec le temps actuel sur une horloge de l'aéronef. La différence de temps fournit le temps de transit TD.

En outre, ledit dispositif 1 peut comporter de plus :
- des moyens 23 qui sont reliés par l'intermédiaire d'une liaison 24 auxdits moyens 22 et qui sont formés de manière à prédire, à l'aide d'un modèle prédictif, une erreur de guidage FTE sur un certain nombre de segments prochains (qui suivent directement le segment courant) à partir du retard (ou temps de transit TD) estimé par lesdits moyens 22. Dans ce cas, on utilise une variable qui représente le temps d'avance TA qu'il est possible d'imposer sur l'ordre de guidage. On obtient ainsi une table de la forme FTE=f(TA) ;
- des moyens 25 qui sont reliés par l'intermédiaire d'une liaison 26 auxdits moyens 23 et qui sont formés de manière à optimiser le temps d'avance TA. Ces moyens 25 déterminent un temps d'avance TA qui minimise l'erreur de guidage FTE, à partir des informations reçues desdits moyens 23 ; et
- des moyens 27 qui sont reliés par l'intermédiaire d'une liaison 28 auxdits moyens 25 et qui sont formés de manière à produire des ordres de guidage en activant l'ordre un temps TA en avance par rapport au point de transition entre le segment courant et le segment suivant de la trajectoire de vol. Cette activation anticipée est transmise par l'intermédiaire d'une liaison 29.

Dans une autre variante de réalisation (non représentée), au lieu d'utiliser un temps d'avance TA, le dispositif 1 prévoit d'avancer les calculs des déviations, mises en oeuvre par lesdits moyens 7 ou par des moyens spécifiques, du temps de transit TD déterminé par lesdits moyens 22, afin de contrer l'effet du retard. On peut y parvenir en corrigeant préalablement, au premier ordre, la position consolidée. Cette variante de réalisation est plus simple que celle représentée sur la figure 2 qui utilise lesdits moyens 23, 25 et 27, puisqu'elle ne met pas en oeuvre de modèle prédictif de l'erreur de guidage FTE. Elle équivaut à ramener le fonctionnement de la boucle de guidage dans un mode avec un plus faible délai.

Le mode de réalisation élaboré du dispositif 1, tel que décrit précédemment et représenté notamment sur la figure 2, présente en particulier les avantages suivants :
- l'amélioration dans la disponibilité d'une position consolidée intègre ; et
- la minimisation de l'erreur de guidage FTE et la possibilité de repousser les limites de la valeur RNP (qu'il est possible de voler avec un aéronef) à une valeur plus faible.

En outre, grâce à l'invention :
- le dispositif 1 d'aide à la navigation et au guidage regroupe les fonctions essentielles à la navigation à performance élevée, en les organisant autour d'une architecture qui en assure la robustesse :
- ledit dispositif 1 est répliqué sur au moins trois canaux indépendants, ce qui permet de disposer d'une forte disponibilité et permet la mise en oeuvre d'une détection automatique et d'une exclusion automatique d'un nombre minoritaire de données de sortie erronées :
- ces données peuvent être fournies à des systèmes associés (calculateur 39, ensemble 45) de l'aéronef, notamment des calculateurs de guidage, d'affichage et/ou de surveillance, ce qui permet par exemple d'assurer que l'aéronef est guidé suivant les données qui sont effectivement affichées ;
- chaque calculateur 2 du dispositif 1 peut être intégré dans un calculateur à forte intégrité existant déjà sur l'aéronef ou être monté dans un calculateur conçu spécialement pour la mise en oeuvre de la présente invention ; et
- une forme élaborée dudit dispositif 1 permet des améliorations supplémentaires concernant l'erreur de guidage FTE, ainsi que la disponibilité d'une position intègre.

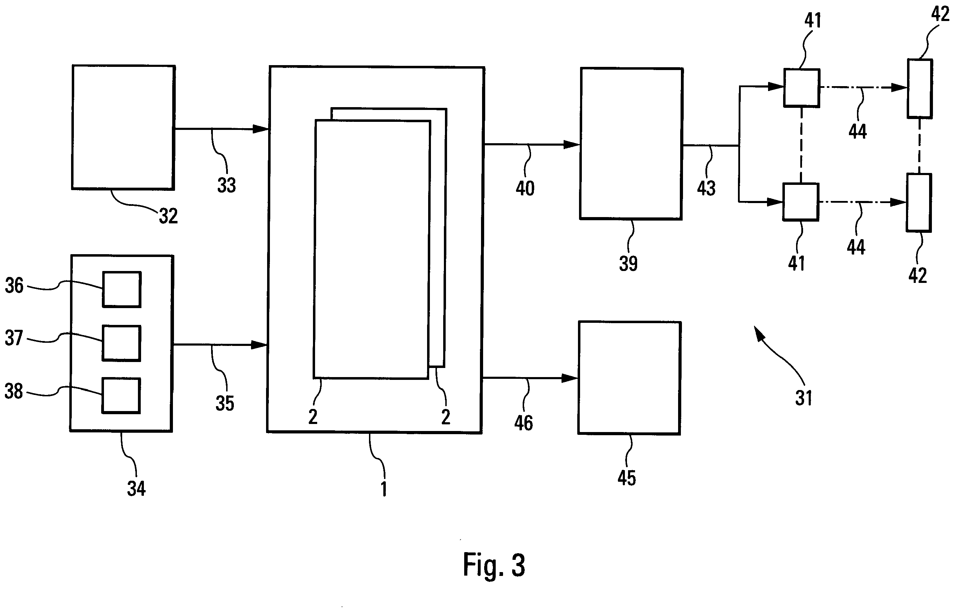

Dans un mode de réalisation préféré, ledit dispositif 1 d'aide à la navigation et au guidage, conforme à l'invention, fait partie d'un système 31 de navigation et de guidage qui comporte, de plus, comme représenté sur la figure 3 :
- des moyens 32 qui sont reliés, par l'intermédiaire d'une liaison 33 (regroupant notamment les liaisons 3A et 3B des figures 1 et 2), audit dispositif 1 et qui sont destinés à fournir au moins ledit ensemble de segments successifs de la trajectoire de vol ;
- un ensemble 34 de sources d'informations, qui est relié par l'intermédiaire d'une liaison 35 (regroupant notamment les liaisons 5A, 5B et 5C des figures 1 et 2) audit dispositif 1, et qui comporte au moins trois sources d'informations différentes 36, 37 et 38. Ces sources d'informations 36, 37 et 38 sont des sources usuelles qui sont destinées à fournir lesdites informations de position courantes et lesdites informations de vitesse courantes ; et
- un calculateur de guidage 39, par exemple de type FG ("Flight Guidance" en anglais), qui est relié par l'intermédiaire d'une liaison 40 (comprenant au moins certaines des liaisons de sortie du dispositif 1, représentées sur les figures 1 et 2) au dispositif 1, qui réalise des traitements usuels destinés au guidage de l'aéronef le long de la trajectoire de vol, et qui élabore notamment, au moins à l'aide des déviations déterminées par ledit dispositif 1, des ordres de guidage ; et
- des moyens d'actionnement 41 usuels d'organes de commande 42 de l'aéronef, par exemple des gouvernes (latérale, de profondeur, de roulis) et/ou des moteurs dudit aéronef. Lesdits moyens d'actionnement 41 reçoivent des ordres de guidage dudit calculateur de guidage 39 par une liaison 43 et actionnent de façon correspondante lesdits organes de commande 42, comme illustré par des liaisons 44 en trait mixte.

Lesdits moyens 32 peuvent notamment comporter un système de gestion de vol, par exemple de type FMS ("Flight Management System" en anglais), qui est par exemple associé à une base de données de navigation et qui détermine, de façon usuelle, les segments successifs de la trajectoire de vol devant être suivie par l'aéronef. Chacune des liaisons 3A et 3B peut être reliée à un calculateur de gestion de vol du système FMS.

En outre, ledit dispositif 1 comporte un ou plusieurs calculateurs 2 de manière à obtenir au moins N canaux indépendants. Sur l'exemple de la figure 3, ledit dispositif 1 comprend deux calculateurs 2 faisant par exemple partie chacun d'un récepteur multimode de type MMR, comme précité.

Par ailleurs, ledit système 31 peut également comporter un ensemble 45 de moyens auxiliaires usuels, qui est relié par l'intermédiaire d'une liaison 46 audit dispositif 1. Cet ensemble 45 peut notamment comporter des moyens d'affichage et/ou des moyens de surveillance et/ou des moyens d'alerte.

## Revendications

1. Dispositif d'aide à la navigation et au guidage d'un aéronef, ledit dispositif (1) comprenant :
- des premiers moyens de calcul (6) pour déterminer une position consolidée de l'aéronef ;
- des seconds moyens de calcul (7) pour déterminer des déviations entre ladite position de l'aéronef et un segment courant d'une trajectoire de vol ; et
- des moyens de transmission (8) pour transmettre lesdites déviations à un calculateur de guidage (39),
- au moins un calculateur (2) qui est embarqué sur l'aéronef, dans lequel sont intégrés lesdits premiers et seconds moyens de calcul (6, 7) et lesdits moyens de transmission (8), et qui comprend, de plus, au moins les moyens intégrés suivants :
. des premiers moyens de réception (3A, 3B) pour recevoir un ensemble de segments successifs d'une trajectoire de vol devant être suivie par l'aéronef ;
. un moyen de mémorisation (4) pour enregistrer lesdits segments ; et
. des seconds moyens de réception (5A, 5B, 5C) pour recevoir, de façon répétitive, respectivement d'au moins trois sources d'informations indépendantes (36, 37, 38), des informations de position courantes de l'aéronef ;
- lesdits premiers moyens de calcul (6) sont formés de manière à déterminer, de façon répétitive, une position consolidée de l'aéronef, à partir desdites informations de position courantes ;
- lesdits seconds moyens de calcul (7) sont formés de manière à déterminer, de façon répétitive, des déviations entre ladite position consolidée et un segment courant de la trajectoire de vol, enregistré dans ledit moyen de mémorisation (4) ;
- ledit dispositif (1) est répliqué sur au moins trois canaux différents et indépendants de sorte que tous les traitements réalisés par ledit dispositif (1) sont réalisés simultanément sur lesdits au moins trois canaux ; **caractérisé en ce que**
- ledit dispositif (1) comporte des moyens (22) pour déterminer des retards dans une chaîne de navigation et de guidage dudit dispositif, lesdits moyens (22) pour déterminer des retards déterminant un temps de transit entre l'arrivée d'une information dans une source de navigation et le déclenchement d'une action, en rapport avec cette information, par une fonction de guidage.

2. Dispositif selon la revendication 1,
**caractérisé en ce qu'**il comporte, de plus, des moyens pour dater les déviations qui sont transmises audit calculateur de guidage (39).

3. Dispositif selon l'une des revendications 1 et 2,
**caractérisé en ce qu'**il comporte, de plus :
- des moyens de réception auxiliaires (5A, 5B, 5C) pour recevoir, de façon répétitive, respectivement d'au moins trois sources d'informations différentes (36, 37, 38), des informations de vitesse courantes de l'aéronef ; et
- des moyens de calcul auxiliaires (6) pour déterminer, de façon répétitive, une vitesse consolidée de l'aéronef, à l'aide desdites informations de vitesse courantes.

4. Dispositif selon l'une quelconque des revendications 1 à 3,
**caractérisé en ce qu'**il comporte, de plus, des moyens (15) pour calculer des données de précision et d'intégrité consolidées, qui sont associées à des positions consolidées et des vitesses consolidées de l'aéronef.

5. Dispositif selon l'une quelconque des revendications 1 à 4, **caractérisé en ce qu'**il comporte, de plus, des moyens (17) pour estimer une erreur de système totale.

6. Dispositif selon l'une quelconque des revendications précédentes,
**caractérisé en ce qu'**il comporte, de plus, des moyens (19) pour déterminer une capacité de l'aéronef à réaliser une opération particulière exigeante en performance.

7. Dispositif selon l'une quelconque des revendications précédentes,
**caractérisé en ce qu'**il comporte, de plus, des moyens (21) pour synchroniser des données provenant de plusieurs sources différentes (36, 37, 38).

8. Dispositif selon l'une quelconque des revendications précédentes,
**caractérisé en ce que** le dispositif (1) est configuré pour avancer les calculs desdites déviations dudit temps de transit.

9. Dispositif selon l'une quelconque des revendications précédentes,
**caractérisé en ce qu'**il comporte, de plus, des moyens (23, 25, 27) pour corriger l'effet desdits retards dans la chaîne de navigation et de guidage, afin de minimiser une erreur de guidage.

10. Dispositif selon la revendication 9,
**caractérisé en ce que**, pour corriger l'effet de retards, ledit dispositif (1) comporte :
- des moyens (23), reliés auxdits moyens (22) pour déterminer des retards, pour prédire, à l'aide d'un modèle prédictif, une erreur de guidage sur un certain nombre de segments prochains qui suivent directement le segment courant de la trajectoire de vol à partir d'un retard estimé ;
- des moyens (25) pour déterminer un temps d'avance qui minimise l'erreur de guidage à partir des informations reçues desdits moyens (23); et
- des moyens (27) reliés par l'intermédiaire d'une liaison (28) auxdiits moyens (25), pour produire des ordres de guidage en réalisant une activation anticipée dudit temps d'avance par rapport au point de transition entre le segment courant et le segment suivant de la trajectoire de vol.

11. Système de navigation et de guidage d'un aéronef,
**caractérisé en ce qu'**il comporte :
- des moyens (32) qui engendrent un ensemble de segments successifs d'une trajectoire de vol devant être suivie par l'aéronef ;
- un ensemble (34) d'au moins trois sources d'informations (36, 37, 38) différentes, qui engendrent chacune des informations de position courantes de l'aéronef ;
- un dispositif (1) selon l'une quelconque des revendications 1 à 10, pour déterminer des déviations entre une position consolidée de l'aéronef, préalablement calculée à l'aide desdites informations de position courantes, et un segment courant de ladite trajectoire de vol ;
- un calculateur de guidage (39) qui élabore, au moins à l'aide des déviations déterminées par ledit dispositif (1), des ordres de guidage destinés au guidage de l'aéronef le long de ladite trajectoire de vol ; et
- des moyens d'actionnement (41) pour actionner des organes de commande (42) de l'aéronef, en fonction des ordres de guidage élaborés par ledit calculateur de guidage (39).

## Patentansprüche

1. Vorrichtung zur Unterstützung der Navigation und zur Steuerung eines Flugzeugs, wobei die Vorrichtung (1) umfasst:
- erste Berechnungsmittel (6), um eine konsolidierte Position des Flugzeugs zu bestimmen;
- zweite Berechnungsmittel (7), um Abweichungen zwischen der Position des Flugzeugs und einem laufenden Segment einer Flugbahn zu bestimmen; und
- Übertragungsmittel (8), um die Abweichungen an einen Steuerrechner (39) zu übertragen,
- mindestens einen Rechner (2), der im Flugzeug eingebaut ist, in dem das erste und zweite Berechnungsmittel (6, 7) und die Übertragungsmittel (8) integriert sind, und der weiter mindestens die folgenden integrierten Mittel umfasst:
• erste Empfangsmittel (3A, 3B), um einen Satz von aufeinanderfolgenden Segmenten einer Flugbahn zu empfangen, der das Flugzeug folgen muss;
• ein Speichermittel (4), um die Segmente aufzuzeichnen; und
• zweite Empfangsmittel (5A, 5B, 5C), um in wiederholter Form jeweils aus mindestens drei unabhängigen Informationsquellen (36, 37, 38) laufende Positionsinformationen des Flugzeugs zu empfangen;
- wobei die ersten Berechnungsmittel (6) so gebildet sind, dass sie in wiederholter Form anhand der laufenden Positionsinformationen eine konsolidierte Position des Flugzeugs bestimmen;
- wobei die zweiten Berechnungsmittel (7) so gebildet sind, dass sie in wiederholter Form Abweichungen zwischen der konsolidierten Position und einem laufenden Segment der Flugbahn bestimmen, das im Speichermittel (4) aufgezeichnet ist;
- wobei die Vorrichtung (1) auf mindestens drei verschiedenen und unabhängigen Kanälen derart repliziert ist, dass alle Bearbeitungen, die von der Vorrichtung (1) ausgeführt werden, gleichzeitig auf den mindestens drei Kanälen ausgeführt werden;
**dadurch gekennzeichnet, dass**
- die Vorrichtung (1) Mittel (22) aufweist, um Verzögerungen in einer Navigations- und Steuerkette der Vorrichtung zu bestimmen, wobei die Mittel (22), um Verzögerungen zu bestimmen, eine Laufzeit zwischen dem Eintreffen einer Information in einer Navigationsquelle und dem Auslösen einer Aktion in Zusammenhang mit dieser Information durch eine Steuerfunktion bestimmt.

2. Vorrichtung nach Anspruch 1,
**dadurch gekennzeichnet, dass** sie weiter Mittel umfasst, um die Abweichungen, die an den Steuerrechner (39) übertragen werden, zu datieren.

3. Vorrichtung nach einem der Ansprüche 1 und 2,
**dadurch gekennzeichnet, dass** sie weiter umfasst:
- zusätzliche Empfangsmittel (5A, 5B, 5C), um in wiederholter Form jeweils aus mindestens drei verschiedenen Informationsquellen (36, 37, 38) laufende Geschwindigkeitsinformationen des Flugzeugs zu empfangen; und
- zusätzliche Berechnungsmittel (6), um in wiederholter Form mithilfe der laufenden Geschwindigkeitsinformationen eine konsolidierte Geschwindigkeit des Flugzeugs zu bestimmen.

4. Vorrichtung nach einem der Ansprüche 1 bis 3,
**dadurch gekennzeichnet, dass** sie weiter Mittel (15) umfasst, um konsolidierte Präzisions- und Integritätsdaten zu berechnen, die konsolidierten Positionen und konsolidierten Geschwindigkeiten des Flugzeugs zugeordnet sind.

5. Vorrichtung nach einem der Ansprüche 1 bis 4,
**dadurch gekennzeichnet, dass** sie weiter Mittel (17) umfasst, um einen Gesamtsystemfehler zu schätzen.

6. Vorrichtung nach einem der vorstehenden Ansprüche,
**dadurch gekennzeichnet, dass** sie weiter Mittel (19) umfasst, um eine Fähigkeit des Flugzeugs, einen speziellen leistungsintensiven Vorgang auszuführen, zu bestimmen.

7. Vorrichtung nach einem der vorstehenden Ansprüche,
**dadurch gekennzeichnet, dass** sie weiter Mittel (21) umfasst, um Daten, die aus mehreren verschiedenen Quellen (36, 37, 38) stammen, zu synchronisieren.

8. Vorrichtung nach einem der vorstehenden Ansprüche,
**dadurch gekennzeichnet, dass** die Vorrichtung (1) dafür ausgebildet ist, die Berechnungen der Abweichungen der Laufzeit vorzuverlegen.

9. Vorrichtung nach einem der vorstehenden Ansprüche,
**dadurch gekennzeichnet, dass** sie weiter Mittel (23, 25, 27) umfasst, um die Auswirkung der Verzögerungen in der Navigations- und Steuerkette zu korrigieren, um einen Steuerfehler zu minimieren.

10. Vorrichtung nach Anspruch 9,
**dadurch gekennzeichnet, dass** um die Auswirkung von Verzögerungen zu korrigieren, die Vorrichtung (1) umfasst:
- Mittel (23), die mit den Mitteln (22) zum Bestimmen der Verzögerungen verbunden sind, um mithilfe eines Vorhersagemodells einen Steuerfehler über eine gewisse Anzahl von nächsten Segmenten, die dem laufenden Segment der Flugbahn direkt folgen, anhand einer geschätzten Verzögerung vorherzusagen;
- Mittel (25), um anhand der von den Mitteln (23) empfangenen Informationen eine Vorverlegungszeit zu bestimmen, die den Steuerfehler minimiert; und
- Mittel (27), die mittels einer Verbindung (28) mit den Mitteln (25) verbunden sind, um Steuerbefehle unter Ausführen einer vorzeitigen Aktivierung der Vorverlegungszeit in Zusammenhang mit dem Übergangspunkt zwischen dem laufenden Segment und dem folgenden Segment der Flugbahn zu erzeugen.

11. Navigations- und Steuersystem für ein Flugzeug,
**dadurch gekennzeichnet, dass** es umfasst:
- Mittel (32), die einen Satz von aufeinanderfolgenden Segmenten einer Flugbahn generieren, der das Flugzeug folgen muss;
- einen Satz (34) von mindestens drei verschiedenen Informationsquellen (36, 37, 38), die jede laufende Positionsinformation des Flugzeugs generieren;
- eine Vorrichtung (1) nach einem der Ansprüche 1 bis 10, um Abweichungen zwischen einer konsolidierten Position des Flugzeugs, die zuvor mithilfe der laufenden Positionsinformationen berechnet wurde, und einem laufenden Segment der Flugbahn zu bestimmen;
- einen Steuerrechner (39), der mindestens mithilfe der von der Vorrichtung (1) bestimmten Abweichungen Steuerbefehle erarbeitet, die zur Steuerung des Flugzeugs entlang der Flugbahn vorgesehen sind; und
- Betätigungsmittel (41), um Stellglieder (42) des Flugzeugs abhängig von den vom Steuerrechner (39) erarbeiteten Steuerbefehlen zu betätigen.

## Claims

1. An assistance device for navigation and guidance of an aircraft, said device (1) comprising:
- first calculation means (6) for determining a consolidated position of the aircraft;
- second calculation means (7) for determining deviations between said position of the aircraft and a current segment of a flight trajectory; and
- transmission means (8) for transmitting such deviations to a guidance calculator (39),
- at least one calculator (2) being on board the aircraft, into which said first and second calculation means (6, 7) and said transmission means (8) are integrated, and which further comprises at least the following integrated means:
• first reception means (3A, 3B) for receiving a set of successive segments of a flight trajectory to be followed by the aircraft;
• memorization means (4) for recording said segments; and
• second reception means (5A, 5B, 5C) for receiving, repeatedly, respectively from at least three independent sources of information (36, 37, 38), current position information for the aircraft;
- said first calculation means (6) are formed so as to determine, repeatedly, a consolidated position of the aircraft, from said current position information;
- said second calculation means (7) are formed so as to determine, repeatedly, the deviations between said consolidated position and a current segment of the flight trajectory, being recorded in said memorization means (4); and
- said device (1) is replicated on at least three different and independent channels so that all the processings performed by said device (1) are simultaneously carried out on said at least three channels,
**characterized in that** said device (1) comprises means (22) for determining delays in a navigation and guidance chain of said device, said means (22) for determining delays determining a transit time between the arrival of a piece of information in a navigation source and the triggering of an action, being related to this piece of information, by a guidance function.

2. A device according to claim 1,
**characterized in that** it further comprises means for dating the deviations being transmitted to said guidance calculator (39).

3. A device according to any of claims 1 and 2, **characterized in that** it further comprises:
- auxiliary reception means (5A, 5B, 5C) for receiving, repeatedly, respectively from at least three different sources of information (36, 37, 38), current speed information for the aircraft;
- auxiliary calculation means (6) for determining, repeatedly, a consolidated speed of the aircraft, by means of said current speed information.

4. A device according to any of claims 1 to 3, ch
aracterized in that it further comprises means (15) for calculating consolidated accuracy and integrity data, being associated with consolidated positions and consolidated speeds of the aircraft.

5. A device according to any of claims 1 to 4, ch
aracterized in that it further comprises means (17) for estimating a total system error.

6. A device according to any of the preceding claims, **characterized in that** it further comprises means (19)
for determining an ability of the aircraft to carry out a particular performance demanding operation.

7. A device according to any of the preceding claims, cha
racterized in that it further comprises means (21) for synchronizing data coming from several different sources (36, 37, 38).

8. A device according to any of the preceding claims, ch
aracterized in that the device (1) is configured to advance the calculations of said deviations of said transit time.

9. A device according to any of the preceding claims, cha
racterized in that it further comprises means (23, 25, 27) for correcting the effect of said delays in the navigation and guidance chain, so as to minimize a guidance error.

10. A device according to claim 9, **characterized in that**, for correcting the effect of delays, said device (1)comprises:
- means (23) being connected to said means (22) for determining delays, for predicting, by means of a predictive model, a guidance error on a number of next segments directly following the current segment of the flight trajectory from an estimated delay;
- means (25) for determining an advance time minimizing the guidance error from information received from said means (23); and
- means (27) being connected via a link (28) to said means (25), for producing guidance orders by carrying out an anticipated activation of said advance time compared to the transition point between the current segment and the next segment of the flight trajectory.

11. A navigating and guidance system for an aircraft, **characterized in that** it comprises:
- means (32) generating a set of successive segments of a flight trajectory to be followed by the aircraft;
- a set (34) of at least three different sources of information (36, 37, 38), each generating current position information of the aircraft;
- a device (1) according to any of claims 1 to 10, for determining deviations between a consolidated position of the aircraft, beforehand calculated through said current position information, and a current segment of said flight trajectory;
- a guidance calculator (39) elaborating, at least by means of the deviations determined by said device (1), guidance orders intended for guiding the aircraft along said flight trajectory; and
- actuation means (41) for actuating control members (42) of the aircraft, as a function of the guidance orders elaborated by said guidance calculator (39).
